# EUROPÄISCHE PATENTANMELDUNG

(11) **EP 4 610 758 A1**
(43) Veröffentlichungstag der Anmeldung: **03.09.2025**
(21) Anmeldenummer: 25159825.6
(22) Anmeldetag: 25.02.2025
(51) Int. Cl.: G05B 19/418

(54) **AUTOMATISCHE PRODUKT- UND REZEPTERKENNUNG IN INDUSTRIEMASCHINE ZUM VERPACKEN ODER ZUR LEBENSMITTELVERARBEITUNG**

(30) Priorität: 29.02.2024 DE 102024105777
(71) Anmelder: MULTIVAC Sepp Haggenmüller SE & Co. KG, 87787 Wolfertschwenden (DE)
(72) Erfinder: PAPENBERG, Simon, 87730 Bad Grönenbach (DE); GRATHWOHL, Marius, 89250 Senden (DE); RICHTER, Jens, Shanghai, 201802 (CN)
(74) Vertreter: Grünecker Patent- und Rechtsanwälte PartG mbB

(57) **Zusammenfassung**

Eine Industriemaschine, die eingerichtet ist zur Lebensmittelverarbeitung oder als Verpackungsmaschine, weist eine Zuführungseinheit, eine Bilderfassungseinheit, eine Klassifizierungseinheit und eine Steuereinheit auf. Die Zuführungseinheit ist eingerichtet, um der Industriemaschine Produkte zur Verarbeitung zuzuführen. Die Bilderfassungseinheit ist eingerichtet, um elektronische Bilddaten zu erfassen, die ein Produkt abbilden. Die Bilddaten werden erfasst, während sich das Produkt in der Zuführungseinheit befindet. Die Klassifizierungseinheit ist eingerichtet, um den Bilddaten eine dem abgebildeten Produkt entsprechende Produktklassifizierung zuzuordnen, wobei das Zuordnen der Produktklassifizierung das Anwenden eines Klassifizierungsmodells auf die Bilddaten umfasst. Die Steuereinheit ist eingerichtet ist, um basierend auf der Produktklassifizierung aus einer Vielzahl von vordefinierten Verarbeitungsrezepten diejenigen zu ermitteln, die zur Verarbeitung des Produktes mit der Industriemaschine eingerichtet sind, und eines der ermittelten Verarbeitungsrezepte als Konfigurationsrezept zu bestimmen. Die Steuereinheit ist ferner eingerichtet, um die Industriemaschine gemäß dem Konfigurationsrezept zur Verarbeitung des Produktes anzupassen.

## Beschreibung

Die vorliegende Erfindung betrifft eine Industriemaschine gemäß Anspruch 1 sowie ein Verfahren zum Betrieb einer Industriemaschine gemäß Anspruch 10. Ferner bezieht sich die Erfindung auf ein Produktverarbeitungssystem gemäß Anspruch 18.

Verpackungs- und Lebensmittelverarbeitungsmaschinen sind komplexe Industriemaschinen, die eine oft schwer zu überblickende Anzahl von Konfigurationsparametern aufweisen. Die Parameterwerte dieser Konfigurationsparameter (oder Betriebsparameter) beeinflussen den Verarbeitungs- bzw. Verpackungsprozess maßgeblich. Jedes Teilsystem der Industriemaschine kann durch das Einstellen von Parameterwerten für entsprechende Betriebsparameter in der Funktion beeinflusst werden. Nur wenn alle Betriebsparameter aufeinander abgestimmt und auf ein zu verarbeitendes Produkt eingestellt sind, kann ein Produkt von der Maschine optimal verarbeitet werden, so dass die Maschine bei der Verarbeitung des Produkts schnell und effizient ein Verarbeitungsergebnis erzielt, das die jeweils zu erreichenden Qualitätsansprüche erfüllt. Einstellbare Betriebsparameter einer Industriemaschine können etwa Motorgeschwindigkeiten, Abstands- oder Dimensionswerte, Werkzeugtemperaturen, Ventilöffnungen, Strömungsgeschwindigkeiten, Druckwerte, Arbeitstaktdauern oder ähnliches sein. Weitere Betriebsparameter können die Art der verwendeten Verbrauchsmaterialien (z.B. der Kunststofftyp oder die Dimensionen von Verpackungsfolien) oder die verwendeten Werkzeuge festlegen. Einige der Betriebsparameter können durch eine Steuerung der Industriemaschine eingestellt werden, entweder programmgesteuert oder über eine Benutzeroberfläche der Steuerung von einem Benutzer der Maschine. Andere Betriebsparameter erfordern eine manuelle Einstellung und können nicht von der Steuerung der Maschine ohne Zutun eines Benutzers eingestellt werden, z.B. die Änderung eines Werkzeugs oder der Wechsel von Verbrauchsmaterialien.

Da die Betriebsparameter der Industriemaschine für jedes zu verarbeitende Produkt angepasst werden müssen, geht jeder Produktwechsel mit einem erheblichen Konfigurationsaufwand einher. Um diesen Aufwand zumindest für Produkte, deren Verarbeitungsparameter schon bekannt sind zu vereinfachen, werden die Betriebsparameter der Maschine inkl. Verbrauchsmaterial- und Werkzeugeinstellungen in sogenannten Rezepten zusammengefasst. Diese Rezepte können in einem Datenspeicher der Maschine oder in externen Datenspeichern vorgehalten werden und in einer Benutzeroberfläche der Industriemaschine einem Benutzer zur Auswahl angezeigt werden. Soll nun eine Industriemaschine auf ein bereits bekanntes Produkt umgestellt bzw. eingerichtet werden, kann der Benutzer mit Hilfe der Benutzeroberfläche aus den vorhanden Rezepten ein für das Produkt bestimmte Rezept auswählen und die Steuerung der Maschine anweisen, die Betriebsparameter der Maschine entsprechend den im Rezept angegebenen Parameterwerten einzustellen. Eventuell muss ein Material- oder Werkzeugwechsel zusätzlich manuell vorgenommen werden. Auf diese Weise kann eine Industriemaschine schnell auf die Verarbeitung eines Produktes umgestellt werden, wenn für das Produkt ein Rezept vorhanden ist.

In vielen Fällen wird eine Verpackungs- oder Lebensmittelverarbeitungsmaschine für eine große Anzahl von verschiedenen Produkten verwendet, wodurch sich eine mindestens ebenso große Zahl von vorgehaltenen Rezepten ergibt. Da für ein Produkt, je nach gewünschtem Verarbeitungsergebnis mehrere Rezepte vorgesehen sein können, übertrifft die Anzahl der Rezepte in vielen Fällen die Anzahl der Produkte bei weitem. Durch eine große Anzahl von vorhandenen Rezepten wird die Auswahl des gewünschten Rezepts an einer Benutzeroberfläche der Industriemaschine unübersichtlich, langsam und fehleranfällig. Die schwierige Rezeptauswahl führt zu längeren Umstellungszeiten und damit zu längeren Stillstandzeiten der Maschine, was die Arbeitseffizienz der Maschine negativ beeinflusst. Ein komplizierter Produktwechsel verringert zudem die Flexibilität der Maschine und macht es ineffizient kleinere Produktaufträge zu bearbeiten, wodurch wiederum die Effizienz der Maschine leidet. Daneben kann das unübersichtliche Auswahlverfahren zu einer Fehlauswahl führen, die ihrerseits zu einer Fehleinstellung der Industriemaschine führen kann. Eine fehlerhafte Einstellung der Maschine kann schwerwiegende Folgen haben, die von verringerter Effizienz, über schlechte Verarbeitungsqualität und hoher Ausschussquote bis hin zu einer Beschädigung der Industriemaschine reichen können.

Aufgabe der Erfindung ist es daher, eine als Verpackungsmaschine oder zur Lebensmittelverarbeitung eingerichtete Industriemaschine zur Verfügung zu stellen, die die Auswahl von geeigneten Verarbeitungsrezepten für ein zu verarbeitendes Produkt erleichtert oder sogar völlig automatisiert. Eine entsprechende Verpackungs- bzw. Lebensmittelmaschine ermöglicht eine effizientere und schnellere Umstellung der Maschine auf die Verarbeitung von neuen Produkten. Zudem wird die Wahrscheinlichkeit von Fehlkonfigurationen der Maschine verringert. Dadurch kann die Maschine flexibler, effizienter und ressourcenschonenderen eingesetzt werden.

Diese Aufgabe wird gelöst durch eine Industriemaschine gemäß Anspruch 1, durch ein Verfahren zum Betrieb einer Industriemaschine gemäß Anspruch 10 oder anhand eines Produktverarbeitungssystems gemäß Anspruch 18.

Vorteilhafte Weiterbildungen der Erfindung sind durch die jeweiligen Gegenstände der Unteransprüche gegeben.

Die vorliegende Erfindung bezieht sich in einem Aspekt auf eine Industriemaschine, die eingerichtet ist zur Lebensmittelverarbeitung oder als Verpackungsmaschine. Die Industriemaschine weist eine Zuführungseinheit auf, die eingerichtet ist, um der Industriemaschine Produkte zur Verarbeitung zuzuführen. Zudem weist die Industriemaschine eine Bilderfassungseinheit, eine Klassifizierungseinheit und eine Steuereinheit auf. Die Bilderfassungseinheit ist eingerichtet, um elektronische Bilddaten zu erfassen, die ein Produkt abbilden. Die Bilddaten werden erfasst, während sich das Produkt in der Zuführungseinheit befindet, z.B. während das Produkt der Industriemaschine von der Zuführungseinheit zur Verarbeitung zugeführt wird. Die Klassifizierungseinheit ist eingerichtet, um den Bilddaten eine dem abgebildeten Produkt entsprechende Produktklassifizierung zuzuordnen, wobei das Zuordnen der Produktklassifizierung das Anwenden eines Klassifizierungsmodells auf die Bilddaten umfasst. Die Steuereinheit ist eingerichtet, um basierend auf der Produktklassifizierung aus einer Vielzahl von vordefinierten Verarbeitungsrezepten diejenigen zu ermitteln, die zur Verarbeitung des Produktes mit der Industriemaschine eingerichtet sind. Zudem ist die Steuereinheit eingerichtet, um eines der ermittelten Verarbeitungsrezepte als Konfigurationsrezept zu bestimmen. Die Steuereinheit ist ferner eingerichtet, um die Industriemaschine gemäß dem Konfigurationsrezept zur Verarbeitung des Produktes anzupassen.

Die vorliegende Erfindung bezieht sich ferner in einem anderen Aspekt auf ein Verfahren zum Betrieb einer Industriemaschine, die zur Lebensmittelverarbeitung oder als Verpackungsmaschine eingerichtet ist. Mittels einer Bilderfassungseinheit der Industriemaschine werden elektronische Bilddaten erfasst, die ein Produkt abbilden. Die Bilddaten werden erfasst, während sich das Produkt in einer Zuführungseinheit der Industriemaschine befindet, wobei die Zuführungseinheit eingerichtet ist, um das Produkt der Industriemaschine zur Verarbeitung zuzuführen. Die Bilddaten werden durch Anwenden eines Klassifizierungsmodells auf die Bilddaten klassifiziert, wobei den Bilddaten als Ergebnis der Klassifizierung eine dem Produkt entsprechende Produktklassifizierung zugeordnet wird. Basierend auf der Produktklassifizierung werden diejenigen Verarbeitungsrezepte aus einer Vielzahl von vordefinierten Verarbeitungsrezepten ermittelt, die zur Verarbeitung des Produktes mit der Industriemaschine eingerichtet sind. Eines der ermittelten Verarbeitungsrezepte wird als Konfigurationsrezept bestimmt und die Industriemaschine wird gemäß dem Konfigurationsrezept zur Verarbeitung des Produktes angepasst.

Zudem bezieht sich die Erfindung in einem weiteren Aspekt auf ein Produktverarbeitungssystem, das eine Vielzahl von Industriemaschinen, eine zentrale Transporteinrichtung, eine Bilderfassungseinheit, eine Klassifizierungseinheit und eine Steuereinheit umfasst. Jeder der Industriemaschinen der Vielzahl von Industriemaschinen, ist zur Lebensmittelverarbeitung oder als Verpackungsmaschine eingerichtet. Jede der Industriemaschinen ist auf die Verarbeitung eines anderen Produktes eingerichtet und umfasst jeweils eine Zuführungseinheit, die eingerichtet ist, um der entsprechenden Industriemaschine Produkte zur Verarbeitung zuzuführen. Die zentrale Transsporteinrichtung ist eingerichtet, um Produkte zu den Zuführungseinheiten der Vielzahl von Industriemaschinen zu transportieren. Die zentrale Transporteinrichtung umfasst eine Verteilungseinrichtung, die eingerichtet ist, um die von der zentralen Transporteinrichtung transportierten Produkte auf die Zuführungseinheiten der Vielzahl von Industriemaschinen zu verteilen. Die Bilderfassungseinheit ist eingerichtet, um elektronische Bilddaten zu erfassen, die ein Produkt abbilden. Die Bilddaten werden erfasst, während sich das Produkt auf der zentralen Transporteinrichtung befindet, beispielsweise während das Produkt auf der zentralen Transporteinrichtung transportiert wird. Die Klassifizierungseinheit ist eingerichtet, um den Bilddaten eine dem Produkt entsprechende Produktklassifizierung zuzuordnen, wobei das Zuordnen der Produktklassifizierung das Anwenden eines Klassifizierungsmodells auf die Bilddaten umfasst. Die Steuereinheit ist eingerichtet, um eine der Vielzahl von Industriemaschinen basierend auf der Produktklassifizierung auszuwählen, so dass die Produktklassifizierung einem Produkt entspricht für dessen Verarbeitung die ausgewählte Industriemaschine eingerichtet ist. Die Steuereinheit ist ferner eingerichtet, um die Verteilungseinrichtung so zu steuern, dass das Produkt von der zentralen Transporteinrichtung an die Zuführungseinheit der ausgewählten Industriemaschine übergeben wird.

Bei der erfindungsgemäßen Industriemaschine kann es sich um eine Verpackungsmaschine (z.B. eine Schalenverschließmaschine, eine Tiefziehverpackungsmaschine, eine Kammermaschine, eine Kammerbandmaschine, einen Traysealer, einen Flowpacker, oder eine Etikettierungsmaschine) oder um eine Lebensmittelverarbeitungsmaschine (z.B. einen Slicer, eine Portionierungsmaschine, oder eine Teigverarbeitungsmaschine) handeln. Die Industriemaschine kann eine oder mehrere Arbeitsstationen aufweisen. Falls die Industriemaschine mehrere Arbeitsstationen aufweist, können diese jeweils einen Teilschritt des gesamten Verarbeitungsprozesses der Industriemaschine durchführen. Das Arbeitsprodukt einer der Arbeitsstationen kann dann einer nachfolgenden Arbeitsstation zur Weiterverarbeitung zugeführt werden und/oder ein Arbeitsprodukt einer vorherigen Arbeitsstation kann von der Arbeitsstation weiterverarbeitet werden. Falls mehrere Arbeitsstationen vorhanden sind, sind diese mittels Produkttransporteinheiten so miteinander verbunden, dass ein Produkt nach der Verarbeitung in einer der Arbeitsstationen automatisch zur nächsten Arbeitsstation transportiert und dieser zur Weiterverarbeitung zugeführt wird. Jede Arbeitsstation kann als eigenständige Industriemaschine fungieren oder im Verbund mit einer oder mehreren anderen Arbeitsstationen eine komplexere Industriemaschine bilden. Die Industriemaschine kann getaktet betrieben werden, so dass die Arbeitszyklen der verschiedenen Arbeitsstationen aufeinander abgestimmt sind. Beispielsweise können die Arbeitsstationen so eingerichtet sein, dass jede Arbeitsstation in einem vorgegebenen Zeitraum (z.B. einem Arbeitstakt) jeweils eine gleiche Anzahl von Produkten verarbeitet.

Die Zuführungseinheit kann beispielsweise ein Förderband umfassen, auf dem gleichartige oder verschiedene Produkte nacheinander in Transportrichtung platziert sind und nacheinander zur ersten Arbeitsstation der Industriemaschine transportiert werden, so dass die erste Arbeitsstation das jeweilige Produkt übernehmen und verarbeiten kann. Falls die erste Arbeitsstation nicht die einzige Arbeitsstation der Industriemaschine ist, erzeugt die erste Arbeitsstation ein Zwischenprodukt, das dann zur nächsten Arbeitsstation zur Weiterverarbeitung transportiert wird. Die nächste Arbeitsstation erzeugt ein weiteres Zwischenprodukt, dass an eine weitere Arbeitsstation weitergereicht wird. Schließlich erreicht das Produkt die letzte Arbeitsstation der Industriemaschine, die das Endprodukt der Industriemaschine erzeugt. Falls die Industriemaschine nur eine Arbeitsstation umfasst, erzeugt bereits diese Arbeitsstation das Endprodukt der Industriemaschine. Die Zuführungseinheit kann alternativ oder zusätzlich ein Transportfahrzeug oder einen Roboterarm umfassen. Das Transportfahrzeug kann autonom oder zentral gesteuert sein und durch einen linearen oder durch einen rotierenden Elektromotor angetrieben werden. Beispielsweise kann die Zuführungseinheit ein lineares Transfersystem umfassen, das eines oder mehrere Transportfahrzeuge aufweist, die als Läufer eines linearen Motors ausgestaltet sind. Der Roboterarm kann eingerichtet sein, um ein Produkt an einer Aufnahmeposition zu erfassen und an eine Abgabeposition zu transportieren, von der aus die erste (oder einzige) Arbeitsstation der Industriemaschine das Produkt verarbeiten kann.

Während sich ein Produkt in der Zuführungseinheit befindet, wird es von der Bilderfassungseinheit abgebildet. Die Bilderfassungseinheit kann beispielsweise eine Digitalkamera sein, die einen lichtempfindlichen elektronischen Sensor (z.B. einen CCD- oder CMOS-Chip) und ein optisches Linsensystem umfasst. Das Linsensystem kann das von dem Produkt reflektierte Licht in einem bestimmten Spektralbereich auf den lichtempfindlichen elektronischen Sensor bündeln. Der elektronische Sensor kann aus einem zweidimensionalen Gitter aus Sensorelementen bestehen. Alle Sensorelemente können Photonen in dem Spektralbereich detektieren und jedes Sensorelement kann beim Auftreffen einer ausreichenden Anzahl von Photonen ein der Anzahl der auftreffenden Photonen entsprechendes elektronisches Signal erzeugen. Die elektronischen Signale, die zu einem Bilderfassungszeitpunkt von den Sensorelementen erzeugt werden, können in Bilddaten umgewandelt werden, die das Produkt (und evtl. einen Teil der näheren Umgebung des Produktes in der Zuführungseinheit) darstellen bzw. abbilden. Die Bilddaten können als zweidimensionalen Pixelmatrizen vorliegen, wobei jeder Pixel durch einen oder mehrere Zahlenwerte (z.B. 8-, 16-, oder 24-Bit Integer-Werte) bestimmt ist. Beispielsweise können die Bilddaten als RGB-Bilddaten vorliegen, wobei insgesamt drei Zahlenwerte pro Pixel verwendet werden, von denen ein erster Zahlenwert den roten Farbanteil, ein zweiter Zahlenwert den grünen Farbanteil und ein dritter Zahlenwert den blauen Farbanteil des entsprechenden Pixels angibt. Die Gesamtheit der Zahlenwerte eines Farbanteils aller Pixel der Bilddaten wird Farbkanal oder einfach Kanal genannt. Die Bilddaten können alternativ in einer Vielzahl von verschiedenen Farbdarstellungen mit unterschiedlichen Farbkanälen vorliegen, z.B. CMYK (4 Kanäle), Graustufen (1 Kanal), CIE, CIELab, HLC (jeweils drei Kanäle). Der Spektralbereich des lichtempfindlichen Sensors umfasst vorzugsweise einen Großteil (z.B. mehr als 60% oder mehr als 80%) des sichtbaren Bereichs des Spektrums, kann aber alternativ oder zusätzlich auch ultraviolette oder infrarote Bereiche des Spektrums umfassen, vorzugsweise Bereiche, die an das sichtbare Spektrum angrenzen.

Die Bilddaten können von der Bilderfassungseinheit an die Klassifizierungseinheit übermittelt werden. Die Klassifizierungseinheit wendet ein Klassifizierungsmodell auf die Bilddaten des Produktes an, um dadurch eine Produktklassifizierung für das Produkt zu erzeugen. Das Klassifizierungsmodell kann jedes geeignete Klassifizierungsmodell sein, mit dem den Bilddaten eine Produktklassifizierung zugeordnet werden kann, die dem abgebildeten Produkt entspricht. Beispielsweise kann das Klassifizierungsmodell ein neuronales Netz (z.B. ein Convolutional Neural Network, CNN, oder ein Residual Neural Network, RNN), eine Support Vector Machine (SVM), einen Entscheidungsbaum (Descision Tree), oder einen Bayes-Klassifikator umfassen.

Das Klassifizierungsmodell kann ein Machine-Learning-Modell sein und kann als Transfer-Learning Modell ausgestaltet sein. Ein Machine-Learning-Modell wird vor dem Einsatz zur Produktklassifizierung in einer Trainingsphase für die Produktklassifizierung trainiert. Ein Machine-Learning-Modell enthält eine Vielzahl von Parametern, die in der Trainingsphase festgelegt werden. In der Trainingsphase werden die Parameter zunächst initialisiert (z.B. durch zufällige Werte oder durch Werte, die aus einem vorherigen Training bereits bekannt sind), dann wird das Modell auf einen Satz von Trainingsbildern angewendet. Beispielsweise können die Trainingsbilder annotiert sein, so dass das Ergebnis der Anwendung des Modells auf eines der Trainingsbilder mit der entsprechenden Annotation des Bildes verglichen werden kann. Die Annotation könnte beispielsweise die korrekte Klasse sein, die dem Bild durch Anwendung des Klassifizierungsmodells zugeordnet werden soll.

Mit den Abweichungen der durch Anwendung des Klassifizierungsmodells auf die Trainingsbilder erzeugten Produktklassifizierungen der einzelnen Trainingsbilder von den durch die entsprechenden Annotationen vorgegebenen korrekten Produktklassifizierungen wird der Wert einer sog. Verlustfunktion (auch Loss Function oder einfach Loss genannt) bestimmt. Durch ein Fehlerrückführungsverfahren (auch "backpropagation" oder "backpropagation of error" genannt) werden anschließend die Parameter des Modells so angepasst, dass sich der Wert der Verlustfunktion verringert. Dieser Vorgang wird wiederholt, bis ein Abbruchkriterium erfüllt ist (z.B. bis eine vorbestimmte Anzahl von Durchgängen erreicht ist oder bis eine Konvergenzbedingung für die Parameter des Modells erreicht ist).

Wenn der Prozess mit annotierten Daten erfolgt, nennt man den Trainingsprozess überwachtes Lernen (oder auch supervised learning). Der Trainingsprozess kann auch als unüberwachtes Lernen (oder auch unsupervised learning) durchgeführt werden. In diesem Fall müssen die Bilddaten nicht annotiert sein, da die Annotationen nicht zur Berechnung des Werts der Verlustfunktion verwendet werden. Entsprechend muss die Abweichung des Ergebnisses der Anwendung des Klassifizierungsmodells von einem gewünschten oder "korrekten" Ergebnis ohne Annotation bestimmbar sein, um einen entsprechenden Wert der Verlustfunktion berechnen zu können. Das kann beispielsweise erreicht werden, indem Teile des Bildes abgedeckt oder transformiert werden und die Aufgabe des Modells die Wiederherstellung des Originalbildes ist. In diesem Fall kann das wiederhergestellte Bild mit dem Originalbild verglichen werden, um die Verlustfunktion zu berechnen. Beispielsweise kann so kann ein Modell mit großen Mengen von nicht annotierten Bildern (z.B. aus einer kommerziellen Bilddatenbank oder aus dem Internet) für die Objekterkennung in Bildern vortrainiert werden. Dieses vortrainierte Modell kann anschließen in einem zweiten Schritt um eine Ausgabeschicht ergänzt werden, die die eigentliche Klassifizierung durchführen kann. Das um die Ausgabeschicht ergänzte Modell kann dann mit einer kleineren Menge von annotierten Bildern für die spezielle Klassifizierungsaufgabe trainiert werden. Der zweite Schritt wird auch Feinabstimmung genannt und dient dazu allgemein für Bilderkennung trainierte Modelle an eine spezielle Aufgabe (z.B. Produktklassifizierung) anzupassen.

Ein mit einem solchen kombinierten Verfahren trainiertes Modell wird Transfer-Learning-Modell genannt. Das Vortraining eines Transfer-Learning-Modells kann auch als überwachtes Lernen mit annotierten Bilddaten stattfinden. Dazu können beispielsweise spezielle öffentlich verfügbare annotierte Bildsammlungen wie ImageNet verwendet werden. Zur Bilderkennung geeignete Machine-Learning-Modelle sind ebenfalls öffentlich verfügbar, z.B. AlexNet, Inception, ResNet-50, VGGNet. Diese Modelle können entweder vollständig selbst trainiert werden oder können bereits vortrainiert verwendet werden. In beiden Fällen kann das Modell durch Hinzufügen einer Ausgabeschicht auf die eigentliche Produktklassifizierungsaufgabe angepasst werden. Die neue Ausgabeschicht kann eine ursprüngliche Ausgabeschicht des Modells ersetzen oder ergänzen. Die hinzugefügte Ausgabeschicht kann eine Vielzahl von trainierbaren Parametern umfassen und kann so ausgestaltet sein, dass sie eine Vielzahl von Wahrscheinlichkeitswerten ausgibt, wobei jeder Wahrscheinlichkeitswert die Wahrscheinlichkeit angibt, dass das in den Bilddaten abgebildete Produkt einer bestimmten Klasse aus einer vorgegebenen Anzahl von Klassen entspricht. Beispielsweise kann die Ausgabeschicht für jede der vorgegebenen Klassen genau einen Wahrscheinlichkeitswert ausgeben, der angibt, mit welcher Wahrscheinlichkeit das abgebildete Produkt der entsprechenden Klasse entspricht. Die Produktklasse mit der höchsten Wahrscheinlichkeit, kann den Bilddaten als die dem Produkt entsprechende Produktklassifizierung zugeordnet werden.

Die Produktklassifizierung kann von der Klassifizierungseinheit an die Steuereinheit übermittelt werden. Die Steuereinheit kann auf die Vielzahl von vordefinierten Verarbeitungsrezepten zugreifen. Die vordefinierten Verarbeitungsrezepte können in einer Speichervorrichtung gespeichert sein. Die Verarbeitungsrezepte können in Form von einzelnen Rezeptdateien in der Speichervorrichtung gespeichert sein, so dass die Steuereinheit direkt auf die einzelnen Rezeptdateien über ein Dateisystem der Speichervorrichtung zugreifen kann. Alternativ oder zusätzlich können die Verarbeitungsrezepte in einer Datenbank auf der Speichervorrichtung verfügbar sein, so dass die Steuereinheit über eine Abfrage an die Datenbank auf die gespeicherten Verarbeitungsrezepte zugreifen kann. Die Speichervorrichtung kann als Teil der Steuereinheit, außerhalb der Steuereinheit aber als Teil der Industriemaschine, oder als externe Speichervorrichtung außerhalb der Industriemaschine ausgeführt sein. Im Fall einer Ausführung als externe Speichervorrichtung, kann die Steuereinheit über ein kabelgebundenes oder kabelloses Datennetzwerk, oder über eine direkte Datenverbindung (z.B. USB oder Modbus) kommunikativ mit der Speichervorrichtung verbunden sein.

Jedes der vordefinierten Verarbeitungsrezepte ist für die Verarbeitung eines bestimmten Produktes durch die Industriemaschine eingerichtet. Für jedes Produkt kann genau ein Verarbeitungsrezept in der Speichervorrichtung gespeichert sein. Alternativ kann für einige oder alle Produkte auch eine Vielzahl von verschiedenen Verarbeitungsrezepten in der Speichervorrichtung gespeichert sein. Die Steuereinheit kann aus der übermittelten Produktklassifizierung das entsprechende Produkt ermitteln und diejenigen in der Speichervorrichtung gespeicherten Verarbeitungsrezepte bestimmen, die für die Verarbeitung dieses Produktes eingerichtet sind.

Jedes der vordefinierten Verarbeitungsrezepte umfasst eine Vielzahl von Parameterwerten von Betriebsparametern der Industriemaschine. Die Betriebsparameter können Betriebsparameter für verschiedenen Komponenten der Industriemaschine umfassen. Die Komponenten der Industriemaschine können Arbeitsstationen, Motoren, Transportbänder, Siegelwerkzeuge, Pumpen, Vakuumelemente, Heizelemente, Ventile und/oder Schalter umfassen. Die Betriebsparameter können Ein- bzw. Ausschaltzeiten für die jeweiligen Komponenten, Druckangaben für Vakuumkammern oder Gaszuführungen, Taktzeiten für einzelne Komponenten, Arbeitstakt- oder Durchsatzangaben für die gesamten Industriemaschine, Vorschubgeschwindigkeiten bzw. Vorschubrichtung von Transportbändern, Motorgeschwindigkeiten, Abstands- oder Dimensionswerte, Werkzeugtemperaturen, Ventilöffnungen, Strömungsgeschwindigkeiten, Angaben über benötigte Werkzeuge oder Verbrauchsmaterialien oder ähnliches umfassen.

Die Steuereinheit bestimmt eines der ermittelten Verarbeitungsrezepte als Konfigurationsrezept, um die Industriemaschine gemäß dem Konfigurationsrezept auf die Verarbeitung des entsprechenden Produktes einzustellen. Das Konfigurationsrezept umfasst eine Vielzahl von Parameterwerten für Betriebsparameter der Industriemaschine. Die Steuereinheit ist vorzugsweise eingerichtet, um die Betriebsparameter der Industriemaschine an die entsprechenden Parameterwerte des Konfigurationsrezepts anzupassen, so dass die Industriemaschine speziell eingerichtet ist, um das Produkt zu verarbeiten. Die Steuereinheit kann die Betriebsparameter der Industriemaschine anpassen indem sie die Parameterwerte des Konfigurationsrezeptes ausliest und Steuerbefehle an die einzelnen Maschinenkomponenten übermittelt, um die Betriebsparameter der einzelnen Maschinenkomponenten gemäß der entsprechenden Parameterwerte des Konfigurationsrezeptes einzustellen und damit die Funktionsweise der Maschinenkomponenten an die Verarbeitung des Produktes anzupassen, für dessen Verarbeitung das Konfigurationsrezept eingerichtet ist. Durch das Einstellen der einzelnen Maschinenkomponenten kann die Funktionsweise der Industriemaschine speziell an die Verarbeitung des Produktes angepasst werden. Vorzugsweise ist die Industriemaschine erst mit der Anpassung der Betriebsparameter der Industriemaschine an die Parameterwerte des Konfigurationsrezepts zur Verarbeitung des entsprechenden Produktes eingerichtet, d.h. dass die Industriemaschine ohne die Anpassung der Betriebsparameter an die Parameterwerte des Konfigurationsrezepts das Produkt nicht verarbeiten kann, etwa weil ungeeignete Einstellungen der Betriebsparameter zu einem vollständig unbrauchbaren Endprodukt, zu einer Fehlfunktion der Industriemaschine oder zu einer hohen Ausschussquote führen.

Falls nur eines der vordefinierten Verarbeitungsrezepte zur Verarbeitung des Produkts mit der Industriemaschine eingerichtet ist, kann dieses eine eingerichtete Verarbeitungsrezept ermittelt werden und als Konfigurationsrezept bestimmt werden. Beispielsweise kann die Steuereinheit aus der übermittelten Produktklassifizierung das entsprechende Produkt ermitteln und das eine in der Speichervorrichtung gespeicherten Verarbeitungsrezept bestimmen, das für die Verarbeitung dieses Produktes eingerichtet ist und dieses als Konfigurationsrezept bestimmen. Die Industriemaschine kann automatisch (d.h. wenigstens teilweise ohne weiteres Eingreifen eines Bedieners oder Benutzers der Industriemaschine) zur Verarbeitung des Produkts gemäß dem Konfigurationsrezept angepasst werden. Beispielsweise kann die Steuereinheit eingerichtet sein, um die Industriemaschine automatisch zur Verarbeitung des Produkts gemäß dem Konfigurationsrezept anzupassen.

Die Industriemaschine kann ferner eine Anzeigeeinheit und eine Eingabeeinheit umfassen. Die Anzeigeeinheit kann z.B. ein LCD oder OLED Bildschirm sein. Die Eingabeeinheit kann eine separate Tastatur und/oder eine Maus oder ein Trackpad sein. Zusätzlich oder alternativ kann die Anzeigeeinheit berührungssensitiv sein, so dass die Anzeigeeinheit gleichzeitig auch als Eingabeeinheit fungieren kann. Die ermittelten Verarbeitungsrezepte (entweder nur ein einziges Verarbeitungsrezept oder eine Vielzahl von Verarbeitungsrezepten), die für die Verarbeitung des durch die Produktklassifizierung angezeigten Produktes eingerichtet sind, können an der Anzeigeeinheit angezeigt werden. In Reaktion auf das Anzeigen der Verarbeitungsrezepte (oder des einen Verarbeitungsrezeptes), kann eine Benutzereingabe von der Eingabeeinheit empfangen werden, die eines der angezeigten Verarbeitungsrezepte bezeichnet. Das bezeichnete Verarbeitungsrezept kann daraufhin als Konfigurationsrezept bestimmt werden.

Beispielsweise kann einem Benutzer ein ermitteltes Verarbeitungsrezept an der Anzeigeeinheit angezeigt werden. Der Benutzer kann daraufhin eine Bestätigungseingabe über die Eingabeeinheit vornehmen, um anzuzeigen, dass die Industriemaschine mit diesem Verarbeitungsrezept als Konfigurationsrezept an die Verarbeitung des Produktes angepasst werden soll. Die Anpassung der Industriemaschine kann in Reaktion auf die empfangene Bestätigung wenigstens teilweise automatisch erfolgen. Alternativ kann einem Benutzer eine Vielzahl von Verarbeitungsrezepten angezeigt werden. Der Benutzer kann in Reaktion auf die Anzeige der Vielzahl von Verarbeitungsrezepten eine Eingabe über die Eingabeeinheit vornehmen, um eines der Rezepte auszuwählen und damit anzuzeigen, dass die Industriemaschine mit dem ausgewählten Verarbeitungsrezept als Konfigurationsrezept an die Verarbeitung des Produktes angepasst werden soll. Die Anpassung der Industriemaschine an das ausgewählte Verarbeitungsrezept als Konfigurationsrezept kann in Reaktion auf die empfangene Auswahl wenigstens teilweise automatisch erfolgen. Vorzugsweise kann die Steuereinheit eingerichtet ist, um die Verarbeitungsrezepte an der Anzeigeeinheit anzuzeigen, die Benutzereingabe zu empfangen und das bezeichnete Verarbeitungsrezept als Konfigurationsrezept zu bestimmen.

Die Bilderfassungseinheit kann ein Kameramodul umfassen. Das Kameramodul kann das optische Linsensystem und den lichtempfindlichen elektronischen Sensor umfassen. Die Bilderfassungseinheit kann die Klassifizierungseinheit umfasst.

Das Konfigurationsrezept kann einen Material- oder Werkzeugwechsel vorsehen, wobei ein Material- oder Werkzeugwechsel möglicherweise nicht automatisch durch die Steuereinheit erfolgen kann, sondern das Engreifen eines Bedieners der Industriemaschine erfordert. Als Teil des Anpassens der Industriemaschine kann der Betrieb der Industriemaschine angehalten werden und ein Hinweis zu dem vorgesehenen Material- oder Werkzeugwechsel kann an einer Anzeigeeinheit der Industriemaschine angezeigt werden. Beispielsweise kann der Hinweis zu dem Werkzeug- oder Materialwechsel an derselben Anzeigeeinheit angezeigt werden, die auch zur Anzeige der Verarbeitungsrezepte verwendet wird. Alternativ kann der Hinweis zu dem Werkzeug- oder Materialwechsel an einer zusätzlichen Anzeigeeinheit angezeigt werden. Ein Bediener der Industriemaschine kann in Reaktion auf die Anzeige des Werkzeug- oder Materialwechsels den entsprechenden Wechsel manuell vornehmen und über eine Eingabeeinheit der Industriemaschine (z.B. dieselbe Eingabeeinheit, die auch zur Auswahl bzw. Bestätigung eines Verarbeitungsrezeptes verwendet wird) bestätigen, dass der Wechsel vorgenommen wurde. In Reaktion auf die Bestätigung kann der Betrieb der Industriemaschine fortgesetzt werden. Vorzugsweise ist die Steuereinheit dazu eingerichtet, um als Teil des Anpassens der Industriemaschine den Betrieb der Industriemaschine anzuhalten und den Hinweis zu dem vorgesehenen Material- oder Werkzeugwechsel an der Anzeigeeinheit der Industriemaschine anzuzeigen.

Das Produkt kann als erstes Produkt in Verarbeitungsrichtung unmittelbar vor einem zweiten Produkt in der Zuführungseinheit angeordnet sein. Zweite elektronische Bilddaten können erfasst werden, die das zweite Produkt abbilden, während es sich in der Zuführungseinheit befindet. Beispielsweise können die zweiten elektronischen Bilddaten nach den ersten elektronischen Bilddaten erfasst werden. Vorzugsweise ist die Bilderfassungseinheit eingerichtet, um die zweiten elektronischen Bilddaten zu erfassen. Den zweiten Bilddaten kann eine dem abgebildeten zweiten Produkt entsprechende zweite Produktklassifizierung zugeordnet werden, wobei das Zuordnen der zweiten Produktklassifizierung das Anwenden des Klassifizierungsmodells auf die zweiten Bilddaten umfasst. Vorzugsweise ist die Klassifizierungseinheit eingerichtet ist, um den zweiten Bilddaten die zweite Produktklassifizierung zuzuordnen. Es kann ferner festgestellt werden, ob die zweite Produktklassifizierung mit der dem ersten Produkt entsprechenden Produktklassifizierung übereinstimmt. Es wird also festgestellt, ob die Klassifizierungseinheit das erste Produkt und das zweite Produkt als gleiche Produkte erkennt. Falls die zweite Produktklassifizierung mit der dem ersten Produkt entsprechenden Produktklassifizierung übereinstimmt, kann das für die Verarbeitung des ersten Produktes eingerichtete Konfigurationsrezept und die entsprechende Anpassung der Industriemaschine für die Verarbeitung des zweiten Produktes beibehalten werden. Insbesondere kann in diesem Fall davon abgesehen werde erneut Verarbeitungsrezepte zu ermitteln, die für die Verarbeitung des zweiten Produktes eingerichtet sind, aus den Verarbeitungsrezepten ein neues Konfigurationsrezept zu bestimmen und die Industriemaschine an das neue Konfigurationsrezept anzupassen. Vorzugsweise ist die Steuereinheit eingerichtet, um die Übereinstimmung der Produktklassifizierungen für das erste und das zweite Produkt zu bestimmen, und im Fall der Übereinstimmung das Konfigurationsrezept und die Anpassung der Industriemaschine beizubehalten.

Falls festgestellt wird, dass die zweite Produktklassifizierung mit der dem ersten Produkt entsprechenden Produktklassifizierung nicht übereinstimmt, können basierend auf der zweiten Produktklassifizierung aus der Vielzahl von vordefinierten Verarbeitungsrezepten diejenigen (z.B. eines oder mehrere Verarbeitungsrezepte) ermittelt werden, die zur Verarbeitung des zweiten Produktes mit der Industriemaschine eingerichtet sind. Eines der ermittelten Verarbeitungsrezepte kann als neues Konfigurationsrezept bestimmt werden und die Industriemaschine kann gemäß dem neuen Konfigurationsrezept zur Verarbeitung des zweiten Produktes angepasst werden. Vorzugsweise kann die Steuereinheit eingerichtet sein, um die Verarbeitungsrezepte zu ermitteln, eines der ermittelten Verarbeitungsrezepte als neues Konfigurationsrezept zu bestimmen und die Industriemaschine gemäß dem neuen Konfigurationsrezept zur Verarbeitung des zweiten Produktes anzupassen.

Vorzugsweise beruht das Klassifizierungsmodell auf maschinellem Lernen. Das Klassifizierungsmodell kann ein künstliches neuronales Netzwerk, ein Transfer-Learning-Modell, eine Support Vector Machine, einen Entscheidungsbaum, und/oder ein Bayes-Modell umfassen. Die Klassifizierung der Bilddaten und das Zuordnung der Produktklassifizierung kann auf einer Vielzahl von verschiedenen Merkmalen in den Bilddaten basieren. Die Merkmale können sich auf die Abbildung des Produktes in den Bilddaten beziehen und die Textur des abgebildeten Produktes, die äußere Kontur des abgebildeten Produktes, die Farbe des abgebildeten Produktes, die Farbverteilung in dem abgebildeten Produkt, den Kontrast des abgebildeten Produktes zur abgebildeten Umgebung, Konturen oder Muster im Inneren des Produktes (z.B. Maserung) und/oder die Form des abgebildeten Produktes umfassen.

Das erfindungsgemäße Produktverarbeitungssystem umfasst eine Vielzahl von Industriemaschinen. Jede der Industriemaschinen kann eine der oben beschriebenen Industriemaschinen sein. Insbesondere entspricht jede der Zuführungseinheiten der Industriemaschinen der oben beschriebenen Zuführungseinheit. Jede der Industriemaschinen kann eine eigene Bilderfassungseinheit, Klassifizierungseinheit und Steuereinheit wie oben beschrieben aufweisen. Einige oder alle der Industriemaschinen können aber auch ohne eigene Bilderfassungseinheit und Klassifizierungseinheit betrieben werden.

Die zentrale Transporteinrichtung des Produktverarbeitungssystems kann beispielsweise ein Förderband umfassen, auf dem gleichartige oder verschiedene Produkte nacheinander in Transportrichtung platziert sind und nacheinander zu den Zuführungseinheiten der Industriemaschinen transportiert werden. Die zentrale Transporteinrichtung kann alternativ oder zusätzlich ein Transportfahrzeug oder einen Roboterarm umfassen. Das Transportfahrzeug kann autonom oder zentral gesteuert sein und durch einen linearen oder durch einen rotierenden Elektromotor angetrieben werden. Beispielsweise kann die Zuführungseinheit ein lineares Transfersystem umfassen, das eines oder mehrere Transportfahrzeuge aufweist, die als Läufer eines linearen Motors ausgestaltet sind. Der Roboterarm kann eingerichtet sein ein Produkt an einer Aufnahmeposition zu erfassen und an eine Abgabeposition zu transportieren.

Die zentrale Transporteinrichtung umfasst z.B. eine Verteilungseinrichtung, die die Produkte von der zentralen Transporteinrichtung auf die Zuführungseinheiten der Industriemaschinen verteilt. Die zentrale Verteilungseinrichtung kann ein quer zur Transportrichtung der zentralen Transportrichtung bewegliches Förderband umfassen. Das Förderband kann zur Aufnahme eines Produktes von der zentralen Transporteinrichtung beispielsweise mit einem Transportförderband der zentralen Transporteinrichtung in Ausrichtung gebracht werden. Wenn das Produkt von dem beweglichen Förderband aufgenommen wurde, kann das bewegliche Förderband quer zur Transportrichtung so verschoben werden (z.B. durch einen linearen Motor), dass es mit einer der Zuführungseinheiten der Industriemaschinen ausgerichtet ist und das Produkt an die Zuführungseinheit abgeben kann. Alternativ oder zusätzlich kann die Verteilungseinrichtung ein Transportfahrzeug oder einen Roboterarm umfassen. Das Transportfahrzeug kann autonom oder zentral gesteuert sein und durch einen linearen oder durch einen rotierenden Elektromotor angetrieben werden. Beispielsweise kann die Zuführungseinheit ein lineares Transfersystem umfassen, das eines oder mehrere Transportfahrzeuge aufweist, die als Läufer eines linearen Motors ausgestaltet sind. Der Roboterarm kann eingerichtet sein ein Produkt an einer Aufnahmeposition in der zentralen Transporteinrichtung zu erfassen und an eine Abgabeposition in einer der Zuführungseinheiten der Industriemaschinen zu transportieren.

Während sich ein Produkt in der zentralen Transporteinrichtung befindet, wird es von der Bilderfassungseinheit abgebildet. Die Bilderfassungseinheit und die elektronischen Bilddaten entsprechen der oben beschriebenen Bilderfassungseinheit der Industriemaschine bzw. den oben beschriebenen Bilddaten.

Im Folgenden werden vorteilhafte Ausführungsformen der Erfindung anhand einer Zeichnung näher erläutert. Im Einzelnen zeigen:
- Fig. 1: ein Ausführungsbeispiel einer erfindungsgemäßen Industriemaschine,
- Fig. 2: ein Ausführungsbeispiel eines erfindungsgemäßen Produktverarbeitungssystems,
- Fig. 3: ein Ausführungsbeispiel eines erfindungsgemäßen Verfahrens zum Betrieb einer Industriemaschine,
- Fig. 4: ein Ausführungsbeispiel für ein erfindungsgemäßes Klassifizierungsmodell, und
- Fig. 5: ein Ausführungsbeispiel einer erfindungsgemäßen Datenverarbeitungseinheit.

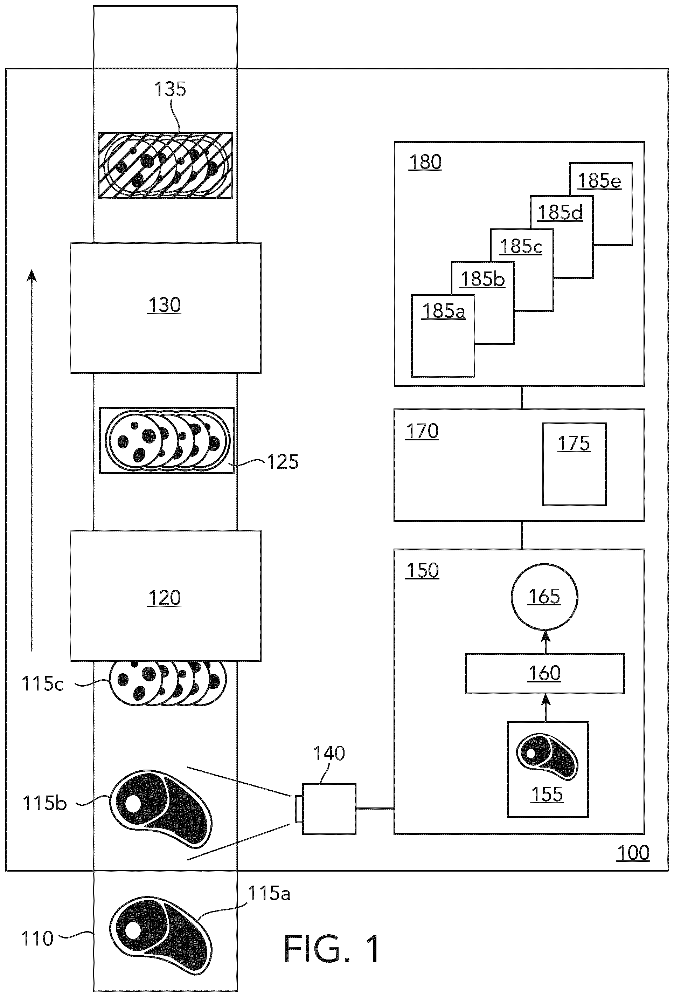

**Fig. 1** zeigt ein Ausführungsbeispiel einer erfindungsgemäßen Industriemaschine 100. Im vorliegenden Beispiel ist eine Verpackungsmaschine zur Verpackung von verschiedenen Lebensmitteln gezeigt. Es kann sich beispielsweise um eine Schalenverschließmaschine, eine Tiefziehverpackungsmaschine, eine Kammermaschine, eine Kammerbandmaschine oder eine Etikettierungsmaschine handeln. Die Industriemaschine ist jedoch nicht auf Verpackungsmaschinen eingeschränkt und kann auch als Lebensmittelverarbeitungsmaschine eingerichtet sein oder als Verpackungsmaschine, die nicht zur Verarbeitung von Lebensmitteln eingerichtet ist. Die Industriemaschine 100 kann eine oder mehrere Arbeitsstationen umfassen. Die Fig. 1 zeigt eine erste Arbeitsstation 120 und eine zweite Arbeitsstation 130. Im gezeigten Beispiel verarbeitet die erste Arbeitsstation 120 ein oder mehrere Eingangsprodukte 115 zu einem oder mehreren Zwischenprodukten 125. In dem abgebildeten Ausführungsbeispiel handelt es sich bei der ersten Arbeitsstation 120 um eine Befüllungsstation, der als Ausgangsprodukte 115 Lebensmittel (z.B. Wurst 115c oder Fleisch 115a, 115b) zugeführt werden, die die erste Arbeitsstation 120 in einen passen Behälter füllt. Die erste Arbeitsstation 120 erzeugt ein Zwischenprodukte 125, das von der zweiten Arbeitsstation 130 zu einem oder mehreren Endprodukten 135 der Industriemaschine 100 weiterverarbeitet wird. Im gezeigten Beispiel handelt es sich bei der zweiten Arbeitsstation um eine Verpackungsstation (z.B. eine Flowpacker-Station oder eine Siegelstation), die den befüllten Behälter in Folie verpackt. Eine erfindungsgemäße Industriemaschine 100 ist nicht auf die beschrieben beispielhaften Arbeitsstationen 120 oder 130 oder die gezeigte Anzahl von Arbeitsstationen beschränkt, sie kann vielmehr jede sinnvolle Anzahl und Kombination von Arbeitsstationen umfassen. So kann beispielsweise nach der Arbeitsstation 130 eine Etikettierungsstation vorgesehen sein, die die verpackten, befüllten Behälter mit einem Produktaufkleber versieht. Eine erfindungsgemäße Industriemaschine 100 kann auch nur eine einzige Arbeitsstation umfassen.

Die Industriemaschine 100 umfasst eine Zuführungseinheit 110, die im vorliegenden Beispiel als Förderband ausgestaltet ist. Die Zuführungseinheit 110 transportiert die Produkte 115 zur ersten Arbeitsstation 120, um die Verarbeitungskette über die Zwischenprodukte 125 zum Endprodukt 135 zu beginnen. Der Pfeil links neben den Arbeitsstationen 120 und 130 gibt die Arbeitsrichtung der Industriemaschine 100 an.

Die Industriemaschine 100 umfasst einen Bilderfassungseinheit 140 mit einem optischen Sensor, der elektronische Bilddaten 155 (z.B. eine digitale Bilddatei) von einem Produkt 115b erzeugt, währen das Produkt 115b sich auf dem Förderband befindet. Das Förderband kann zur Erfassung der Bilddaten 155 angehalten werden oder während der Erfassung der Bilddaten 155 weiterlaufen. Die Bilddaten 155 werden an eine Klassifizierungseinheit150 übermittelt. Der optische Sensor kann jeder geeignete bildgebende Sensor sein, der Bilddaten 155 aus Licht im sichtbaren, im ultravioletten, und/oder im infraroten Spektralbereich erzeugt. Dabei kann es sich beispielsweise um eine CMOS oder CCD Kamera, eine Infrarotkamera und/oder eine Time-of-Flight Kamera handeln. Die erzeugten Bilddaten 155 können als zweidimensionales Pixelarray aufgezeichnet werden. Jedem Pixel können dabei ein oder mehrere Farbwerte (z.B. ein Graustufenwert; Rot-, Grün- und Blauwerte oder Cyan-, Magenta, Gelb und Schwarzwerte) zugeordnet sein und/oder ein Wert, der den Abstand des dem Pixel entsprechenden Bildpunktes von der Kamera angibt.

Die Industriemaschine 100 umfasst eine Klassifizierungseinheit 150, die eingerichtet ist, um den Bilddaten 155 eine Produktklassifizierung 165 zuzuordnen, indem sie ein Klassifizierungsmodell 160 auf die Bilddaten 155 anwendet. Die Produktklassifizierungen 165, die den Bilddaten zugeordnet werden, entsprechen den verschiedenen Arten von Produkten, die von der Industriemaschine verarbeitet werden sollen. Für jede Produktart wird eine eigene Produktklassifizierung erstellt. Wenn eine Industriemaschine fünf verschiedene Arten von Produkten verarbeiten soll (z.B. Wurstscheiben, Steaks, Hühnerbeine, Putenbrüste und Bratwürste) dann gibt es auch fünf verschiedene Produktklassifizierungen, eine Produktklassifizierung für jede Produktart.

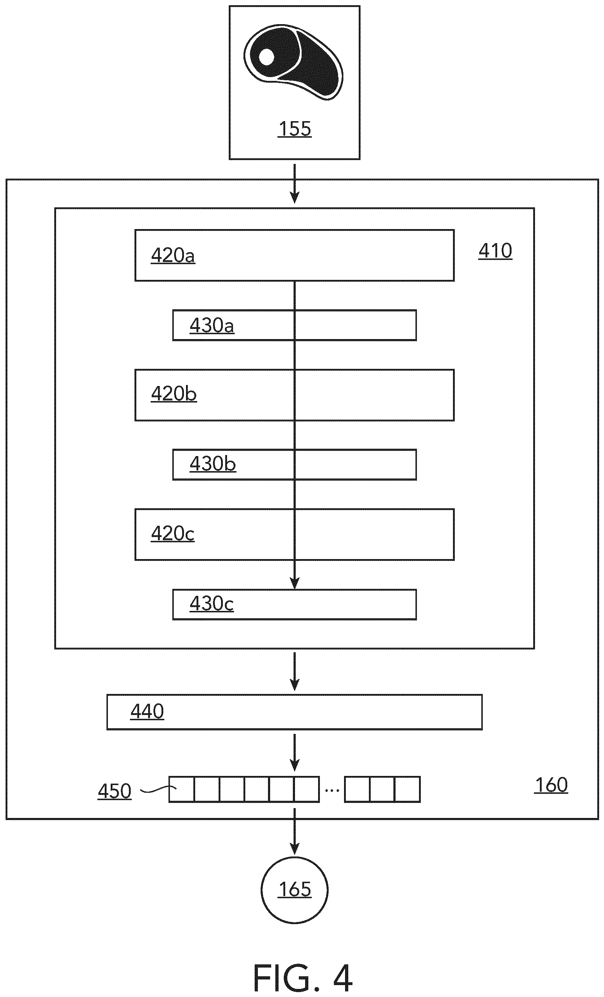

Das Klassifizierungsmodell kann ein Maschine-Learning-Modell sein, bei dem das Modell für die spezielle Aufgabe der Produktklassifizierung trainiert werden muss, bevor es zur Klassifizierung verwendet werden kann. Dazu kann ein Deep-Learning-Modell, das z.B. als neuronales Netz ausgestaltet ist verwendet werden. Geeignete Modelle und Modellarchitekturen sind öffentlich zugänglich, z.B. AlexNet, Inception, ResNet-50, VGGNet. Ein solches Modell muss durch anpassen deiner Ausgangsschicht an die spezielle Produktklassifizierungsaufgabe angepasst werden. Eine beispielhafte Ausführungsform für ein Neuronales Netz und Details zum Training eines neuronalen Netzes werden im Zusammenhang mit Fig. 4 beschrieben.

Zudem umfasst die Industriemaschine 100 eine Steuereinheit 170, die eingerichtet ist, den Verarbeitungsprozess der Industriemaschine 100 zu steuern. Steuereinheit 170 und die Klassifizierungseinheit 150 können als separate Einrichtungen der Industriemaschine 100 ausgeführt sein. Alternativ können die Steuereinheit 170 und die Klassifizierungseinheit 150 als eine gemeinsame Einrichtung der Industriemaschine 100 ausgeführt sein. Die Klassifizierungseinheit 150 kann mit der Steuereinheit 170 kommunikativ verbunden sein und kann eingerichtet sein, die den Bilddaten zugeordnete Produktklassifizierung 165 an die Steuereinheit 170 zu übermitteln.

Die Industriemaschine 100 kann eine Speichervorrichtung 180 umfassen, die eine Vielzahl von vordefinierten Verarbeitungsrezepten (185a, 185b, 185c, 185d, 185e) speichert. Jedes der Verarbeitungsrezepte 185 umfasst Parameterwerte von Betriebsparametern der Industriemaschine, die so ausgestaltet sind, dass die Industriemaschine von der Steuereinheit basierend auf den Parameterwerten der Betriebsparameter speziell für die Verarbeitung eines bestimmten Produktes (z.B. eines Produkts einer bestimmten Produktart) eingerichtet werden kann.

Die Steuereinheit 170 kann auf die Speichervorrichtung 180 zugreifen, um aus der Vielzahl von Verarbeitungsrezepten 185 diejenigen zu bestimmen, die eingerichtet sind, die Industriemaschine für die Verarbeitung des Produktes 115b (oder dessen Produktart) anzupassen, die der Produktklassifizierung 165 entspricht, das den erzeugten Bilddaten 155 von der Klassifizierungseinheit 150 zugewiesen. Wurde. Wenn in der Speichervorrichtung 180 nur ein zu der Produktklassifizierung passendes Verarbeitungsrezept vorhanden ist, wird dieses als Konfigurationsrezept 175 von der Steuereinheit bestimmt. Wenn in der Speichervorrichtung mehrere zur Produktklassifizierung passende Verarbeitungsrezepte vorhanden sind, wird aus diesen von der Steuereinheit ein Konfigurationsrezept 175 bestimmt. Die Industriemaschine 100 wird dann gemäß der Parameterwerte der Betriebsparameter der Industriemaschine 100, die im Konfigurationsrezept 175 angegeben sind auf die Verarbeitung des Produktes 115b eingerichtet. Schließlich kann die auf die Verarbeitung des Produktes 115b eingerichtete Industriemaschine 100 das Produkt 115b verarbeiten, um ein gewünschtes Endprodukt 135 zu erzeugen.

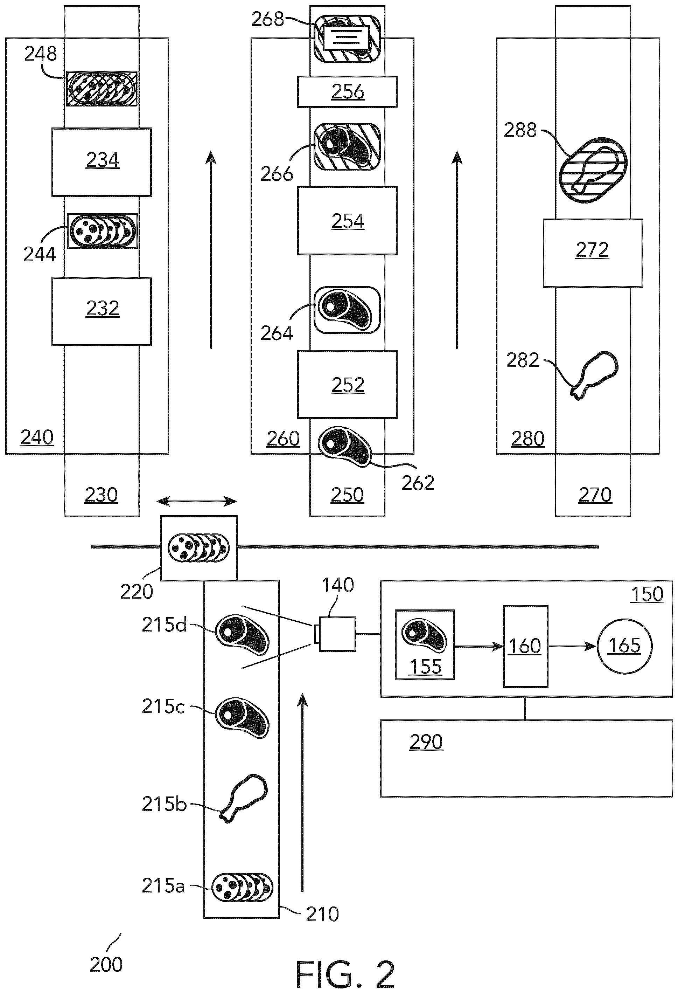

Die **Fig. 2** zeigt eine beispielhafte Ausführungsform eines Produktverarbeitungssystems 200. Das Produktverarbeitungssystem 200 umfasst eine zentrale Transporteinrichtung 210 und eine Vielzahl von Industriemaschinen 240, 260, 280. Die zentrale Transporteinrichtung 210 ist hier beispielhaft als Förderband ausgestaltet.

Die Industriemaschinen 240, 260, 280 sind zur Lebensmittelverarbeitung oder als Verpackungsmaschinen eingerichtet. Jede Industriemaschine 240, 260, 280 umfasst eine oder mehrere Arbeitsstationen und jeweils eine Zuführungseinheit. Die Industriemaschine 240 ist zur Verarbeitung eines ersten Produktes (oder einer ersten Produktart, z.B. Wurstscheiben) eingerichtet und umfasst zwei Arbeitsstationen 232 und 234 und die Zuführungseinheit 230. Hier sind für die Industriemaschine 240 beispielhaft ein Zwischenprodukt 244 als Arbeitsprodukt der Arbeitsstation 232 und ein Endprodukt 248 als Arbeitsprodukt der Arbeitsstation 234 gezeigt. Die Zuführungseinheit 230 entspricht der Zuführungseinheit 110 und ist eingerichtet, um der Industriemaschine 240 Produkte zur Verarbeitung zuzuführen.

Die Industriemaschine 260 ist zur Verarbeitung eines zweiten Produktes (oder einer zweiten Produktart, z.B. Steaks) eingerichtet und umfasst die drei Arbeitsstationen 252, 254 und 256 und die Zuführungseinheit 250. Hier sind für die Industriemaschine 260 beispielhaft ein Eingangsprodukt 262, ein Zwischenprodukt 264 als Arbeitsprodukt der Arbeitsstation 252, ein weiteres Zwischenprodukt 266 als Arbeitsprodukt der Arbeitsstation 254 und ein Endprodukt 248 als Arbeitsprodukt der Arbeitsstation 256 gezeigt. Die Zuführungseinheit 250 entspricht der Zuführungseinheit 110 und ist eingerichtet, um der Industriemaschine 260 Produkte zur Verarbeitung zuzuführen.

Die Industriemaschine 260 ist zur Verarbeitung eines dritten Produktes (oder einer dritten Produktart, z.B. Hühnerbeine) eingerichtet und umfasst eine einzige Arbeitsstation 272 und die Zuführungseinheit 270. Hier sind für die Industriemaschine beispielhaft ein Eingangsprodukt 282 und ein Endprodukt 288 als Arbeitsprodukt der Arbeitsstation 272 gezeigt. Die Zuführungseinheit 270 entspricht der Zuführungseinheit 110 und ist eingerichtet, um der Industriemaschine 280 Produkte zur Verarbeitung zuzuführen. Die Pfeile zwischen den Industriemaschinen 240, 260, 280 geben die Transport- bzw. Arbeitsrichtung der Industriemaschinen 240, 260, 280 an.

Die zentrale Transporteinrichtung 210 umfasst eine Verteilungseinrichtung 220. Der Pfeil neben der zentralen Transporteinrichtung 210 gibt die Transport- bzw. Arbeitsrichtung der zentralen Transporteinrichtung 210 an. Die Verteilungseinrichtung 220 ist hier beispielhaft als Förderband ausgestalten das quer zur Transportrichtung der zentralen Transporteinrichtung 210 und damit zur Transportrichtung des Förderbands der Verteilungseinrichtung 220 bewegt werden kann. z.B. mittels eines linearen Motors. Die Verteilungseinrichtung 220 ist eingerichtet, um die von der zentralen Transporteinrichtung 210 transportierten Produkte (215a, 215b, 215c, 215d) auf die einzelnen Industriemaschinen 240, 260, 280 zu verteilen. Die Verteilungseinrichtung 220 kann in der Verlängerung des Förderbandes der zentralen Transporteinrichtung 210 positioniert werden, um ein Produkt (215a, 215b, 215c, 215d) vom Förderband der zentralen Transporteinrichtung 210 zu übernehmen. Danach kann das Förderband der Verteilungseinrichtung 220 so positioniert werden, dass sie die Verlängerung einer Zuführungseinheit 230, 250, 270 bildet, um das aufgenommene Produkt an die entsprechende Zuführungseinheit abzugeben.

Das Produktverarbeitungssystem 200 umfasst eine Bilderfassungseinheit 140 mit einem optischen Sensor, der elektronische Bilddaten 155 (z.B. eine digitale Bilddatei) von einem Produkt 215d erzeugt, währen das Produkt 215d sich auf der zentralen Transporteinrichtung 210 befindet. Die zentrale Transporteinrichtung 210 kann zur Erfassung der Bilddaten 155 angehalten werden oder während der Erfassung der Bilddaten 155 weiterlaufen. Die Bilddaten 155 werden an eine Klassifizierungseinheit 150 des Produktverarbeitungssystems übermittelt. Die Bilderfassungseinheit 140, die Bilddaten 155 und die Klassifizierungseinheit 150 gleichen den entsprechenden Komponenten, die oben für die Industriemaschine 100 bereits beschrieben wurden.

Das Produktverarbeitungssystem 200 umfasst die Klassifizierungseinheit 150, die eingerichtet ist, um den Bilddaten 155 eine Produktklassifizierung 165 zuzuordnen, indem sie ein Klassifizierungsmodell 160 auf die Bilddaten 155 anwendet. Die Produktklassifizierungen 165 die den Bilddaten zugeordnet werden entsprechen den verschiedenen Arten von Produkten, die von den Industriemaschinen 240, 260, 280 verarbeitet werden sollen. Für jede Produktart wird eine eigene Produktklassifizierung 165 erstellt. Wenn insgesamt fünf verschiedene Arten von Produkten verarbeiten soll (z.B. Wurstscheiben, Steaks, Hühnerbeine, Putenbrust und Bratwürste) dann gibt es auch fünf verschiedene Produktklassifizierungen 165, eine Produktklassifizierung 165 für jede Produktart.

Zudem umfasst das Produktverarbeitungssystem 200 eine Steuereinheit 290, die eingerichtet ist, den Verarbeitungsprozess des Produktverarbeitungssystems 200 zu steuern. Steuereinheit 290 und die Klassifizierungseinheit 150 können als separate Einrichtungen des Produktverarbeitungssystems 200 ausgeführt sein. Alternativ können die Steuereinheit 290 und die Klassifizierungseinheit 150 als eine gemeinsame Einrichtung des Produktverarbeitungssystems 200 ausgeführt sein. Die Klassifizierungseinheit 150 kann mit der Steuereinheit 290 kommunikativ verbunden sein und kann eingerichtet sein, um die den Bilddaten zugeordnete Produktklassifizierung 165 an die Steuereinheit 290 zu übermitteln. Die Steuereinheit 290 ist eingerichtet, um eine der Industriemaschinen 240, 260, 280 basierend auf der Produktklassifizierung auszuwählen, so dass die Produktklassifizierung 154 dem Produkt 215d (bzw. der Produktart) entspricht für dessen Verarbeitung die ausgewählte Industriemaschine 260 eingerichtet ist. Die Steuereinheit 290 ist außerdem eingerichtet, um die Verteilungseinrichtung 220 so zu steuern, dass das Produkt 215d von der zentralen Transporteinrichtung 210 an die Zuführungseinheit 250 der ausgewählten Industriemaschine 260 übergeben wird, um von der ausgewählten Industriemaschine 260 verarbeitet zu werden.

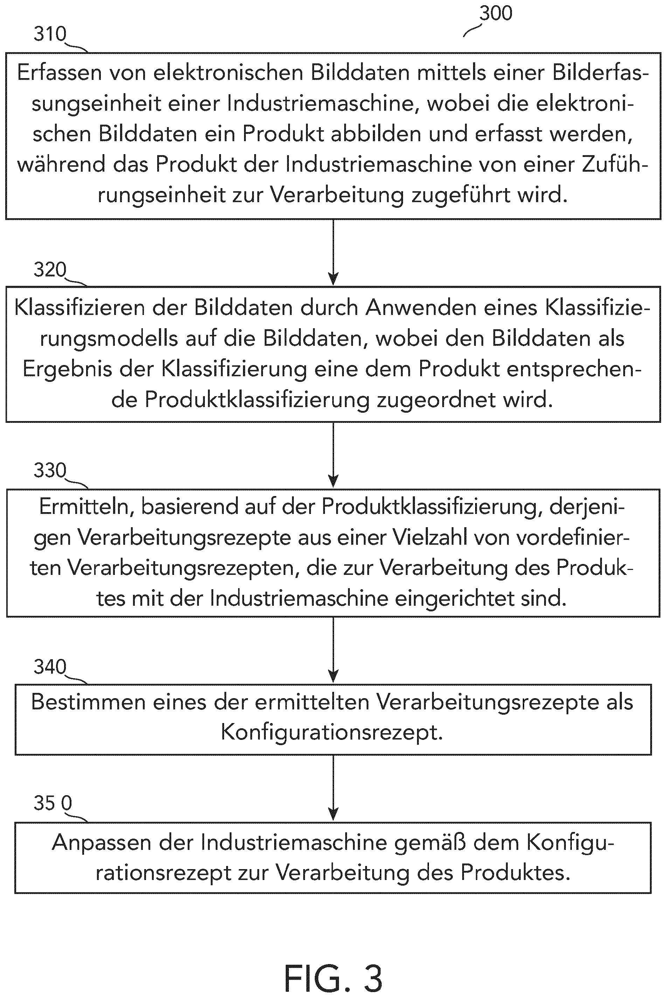

**Fig. 3** zeigt eine beispielhafte Ausführungsform eines Verfahrens 300 zum Betrieb einer Industriemaschine 100, die zur Lebensmittelverarbeitung oder als Verpackungsmaschine eingerichtet ist. In einem ersten Schritt **310** werden elektronische Bilddaten 155 mittels einer Bilderfassungseinheit 140 der Industriemaschine 100 erfasst, wobei die elektronischen Bilddaten 155 ein Produkt 115b abbilden und erfasst werden, während sich das Produkt 115b in einer Zuführungseinheit 110 der Industriemaschine befindet, wobei die Zuführungseinheit 110 eingerichtet ist, um das Produkt 115b der Industriemaschine 100 zuzuführen.

In einem darauffolgenden Schritt **320** werden die Bilddaten 155 durch Anwenden eines Klassifizierungsmodells 160 auf die Bilddaten 155 klassifiziert, wobei den Bilddaten 155 als Ergebnis der Klassifizierung eine dem Produkt 115b entsprechende Produktklassifizierung 165 zugeordnet wird.

Nach der Klassifizierung der Bilddaten 155 werden im Schritt **330** basierend auf der Produktklassifizierung 165, diejenigen Verarbeitungsrezepte aus einer Vielzahl von vordefinierten Verarbeitungsrezepten 185 ermittelt, die zur Verarbeitung des Produktes 115b mit der Industriemaschine 100 eingerichtet sind. Die ermittelten Verarbeitungsrezepte können nur ein einziges Verarbeitungsrezept oder eine Vielzahl von Verarbeitungsrezepten umfassen.

Aus den ermittelten Verarbeitungsrezepten wird im Schritt **340** ein Verarbeitungsrezept als Konfigurationsrezept 175 bestimmt. Im abschließenden Schritt **350** wird die Industriemaschine 100 gemäß dem Konfigurationsrezept 175 zur Verarbeitung des Produktes 115b angepasst. Das Produkt 115b kann dann von der an die Verarbeitung des Produktes 115b angepassten Industriemaschine verarbeitet werden, so dass ein oder mehrere Zwischenprodukte 125 und ein Endprodukt 135 gemäß den Vorgaben des Konfigurationsrezeptes 175 erzeugt werden.

Die Klassifikationseinheit 150 umfasst ein Klassifikationsmodel 160, das auf Bilddaten 155 angewendet wird, um eine Produktklassifizierung 165 für ein auf den Bilddaten 155 abgebildetes Produkt zu erzeugen. Das Klassifizierungsmodell 160 kann jedes zur Produktklassifizierung aus Bilddaten 155 geeignete Modell sein, wie etwa ein ein- oder mehrschichtiges Neuronales Netzwerk, oder ein Bayes-Klassifikator. **Fig. 4** zeigt eine beispielhafte Ausführungsform eines Klassifikationsmodels 160. Das Klassifizierungsmodell 160 kann ein Machine-Learning-Modell sein, das als neuronales Netz ausgestaltet ist. In der gezeigten beispielhaften Ausführungsform handelt es sich bei dem Klassifizierungsmodell um eine besondere Form eines neuronalen Netzes, nämlich um ein sog. Convolutional Neural Network (CNN). Das CNN besteht aus mehreren Schichten, die nacheinander durchlaufen werden. Die Bilddaten 155 werden durch eine oder mehrere zweidimensionale Zahlenmatrizen dargestellt, wobei jede Zahlenmatrix ganzzahlige Werte (z.B. 8-bit oder 16-bit Interger-Werte) enthalten kann. Jeder Eintrag in eine Zahlenmatrix kann den entsprechenden Wert eines Farbkanals für ein Pixel an der entsprechenden Stelle der Pixelmatrix der Bilddaten darstellen. Im Falle von RGB Bilddaten erhält man jeweils eine Zahlenmatrix für den Rot-, den Grün-, und den Blaukanal. Entsprechend kann für andere Farbsystem vorgegangen werden.

Zunächst wird auf die Zahlenmatrizen eine Faltungsschicht 420a (oder auch convolutional layer) angewandt. Dabei wird die diskrete Faltung mit einem oder mehreren Faltungskernen mit jeder der Zahlenmatrizen berechnet. Ein Faltungskern ist eine zweidimensionale typischerweise quadratische Matrix, die eine kleinere Dimension hat als die Zahlenmatrizen, die aus den Bilddaten erzeugt werden. Beispielsweise kann ein Faltungskern eine 3x3, 4x4 oder 5x5 Matrix aus ganzzahligen Werten sein. Die Werte der Faltungskerne werden durch einen Trainingsprozess bestimmt.

In einem nachfolgenden Schritt 430a wird ein Subsampling durchgeführt, bei dem die Anzahl der verbleibenden Matrizeneinträge reduziert wird. Beispielsweise können die Ergebnismatrizen der Faltungsschicht 420a jeweils in 2x2-Blöcke aufgeteilt werden und aus diesen 2x2 Blöcken nur der größte Matrixeintrag in die entsprechende Ergebnismatrix des Subsampling-Schrittes 430a übernommen werden. Dadurch verringert sich die Anzahl der Matrixeinträge um den Faktor vier. Die Blockaufteilung ist hier nur beispielhaft angegeben, andere Aufteilungen inklusive überlappender Aufteilungen sind ebenfalls möglich.

Auf die Ergebnismatrizen des Subsampling-Schrittes wird kann eine weitere Faltungsschicht 420b angewendet werden, gefolgt von einem weiteren Subsampling-Schritt 430b. Der Vorgang wird mit der Faltungsschicht 420c und dem Subsampling-Schritt 430c noch einmal wiederholt und kann noch weitere Male mit weiteren Faltungsschichten und Subsampling-Schritten wiederholt werden. Die beschriebene Abfolge von Faltungsschichten und Subsampling-Schritten ist hier als Kernmodell 410 zusammengefasst. Nach dem Durchlaufen des Kernmodells 410 kann ein sog. fully connected layer 440 angewandt werden, der die eigentliche Klassifizierung erzeugt. Der fully connected layer 440 kann eingerichtet sein, um alle aus dem Kernmodell 410 erhaltenen Ergebnismatrizenwerte über gewichtete Summen in Wahrscheinlichkeitswerte 450 für eine jede der Produktklassen umzuwandeln, die von dem Klassifizierungsmodell erkannt werden sollen. Die entsprechenden Gewichte werden in einem Trainingsschritt ermittelt.

In einem letzten Schritt kann die Produktklasse mit der höchsten Wahrscheinlichkeit als Produktklassifizierung 165 für die verarbeiteten Bilddaten 155 ausgegeben werden. Falls mehrere Produktklassen vergleichbare Wahrscheinlichkeitswerte haben, kann auch keine Produktklasse oder eine Nullklasse zurückgegeben werden.

Das gesamte Klassifizierungsmodell 160 kann eine Vielzahl von anpassbaren Modellparametern umfassen (z.B. die Zahlenwerte der Faltungskerne der verschiedenen Faltungsschichten 420a, 420b und 420c) und die Gewichte des fully connected layer). In einer Trainingsphase werden die Modellparameter so angepasst, dass das trainierte Klassifizierungsmodell 160 eine möglichst zutreffende Produktklassifizierung bei Anwendung auf die Bilddaten 155 liefert.

In der Trainingsphase kann das Modell auf eine Menge von Trainingsdaten angewendet werden. Diese Trainingsdaten können aus einer Vielzahl von Bilddaten (z.B. digitalen Bildern) bestehen, die alle zu klassifizierenden Produkte abbilden. Für jedes der zu klassifizierenden Produkte muss eine ausreichende Anzahl von verschiedenen digitalen Bildern vorhanden sein, um ein ausreichendes Trainingsergebnis zu erzielen. Die Bilddaten können aus öffentlich zugänglichen und/oder kommerziell erhältlichen Bildsammlungen ausgewählt werden. Vorzugsweise können die Bilddaten unter den gleichen Licht- und optischen Umgebungsverhältnissen, die auch bei der späteren Klassifizierung vorliegen durch die Bilderfassungseinheit 140 erzeugt werden. Beispielsweise kann in einer Lernphase der Industriemaschine 100, die Industriemaschine 100 eingerichtet sein, um einen Trainingsdatensatz von Bildern der zu kategorisierenden Produkte mittels der Bilderfassungseinheit 140 selbst zu erzeugen. Vorzugsweise werden die Bilddaten annotiert, d.h. es wird für die Bilddaten die jeweils korrekte Produktklassifizierung bestimmt und den Bilddaten zugeordnet. Dieser Vorgang kann beispielsweise manuell (z.B. durch einen Bediener der Maschine in der Lernphase der Industriemaschine) erfolgen. Die Anwendung des Modells auf eine der Bilddaten der Trainingsdaten liefert eine zugeordnete Produktklassifizierung. Die dadurch erhaltene Produktklassifizierung kann jeweils mit der korrekten Produktklassifizierung der entsprechenden Annotation verglichen werden.

Das Neuronal Netz kann trainiert werden, indem für alle Bilddaten der Trainingsdaten der Wert einer Verlustfunktion (d.h. einer Fehlerfunktion) bestimmt wird. Zunächst wird das Klassifizierungsmodell 160 auf die Bilddaten der Trainingsdaten angewandt und für jede der Bilddaten die entsprechenden Produktklassifizierungen bestimmt. Aus den Annotationen der Bilddaten der Trainingsdaten und den erzeugten Produktklassifizierungen kann der Wert der Verlustfunktion bestimmt werden. Der Wert der Verlustfunktion kann die Größe der Abweichung der durch Anwendung des Klassifizierungsmodells bestimmten Produktklassifizierungen und der durch die Annotation angezeigten korrekten Produktklassifizierungen angeben.

Die Trainingsparameter des Klassifizierungsmodells 160 können durch ein Fehlerrückführungsverfahren (auch "backpropagation" oder "backpropagation of error" genannt) angepasst werden, um den Wert der Verlustfunktion für die Trainingsdaten zu optimieren (z.B. zu minimieren). Die Modell-Parameter können so angepasst werden, dass der Wert der Verlustfunktion nach Anpassen der Modell-Parameter kleiner ist als vor dem Anpassen der Modell Parameter. Das Vorgehen wird so lange wiederholt, bis eine Abbruchbedingung erfüllt ist. Die Abbruchbedingung kann das Erreichen einer vorgegebenen Anzahl von Wiederholungen oder das Erfüllen einer Konvergenzbedingung für die Modellparameter sein. Das Ergebnis des Trainings des Klassifizierungsmodells 160, kann ein trainiertes Klassifizierungsmodell 160 sein, das optimierte Modell-Parameter umfasst, so dass die Anwendung des Klassifizierungsmodells 160 auf weitere Bilddaten, die Produkte Abbilden für die das Klassifizierungsmodell 160 trainiert wurde, korrekte Produktklassifizierungen erzeugt.

In der Trainingsphase kann das gesamte Klassifizierungsmodell in einem Schritt trainiert werden. Dazu werden die Parameterwerte zunächst initialisiert (z.B. durch Zufallszahlen) und dann wird das beschriebene Training durchgeführt. Dazu wird typischerweise eine sehr große Anzahl von Bilddaten als Trainingsdaten für jedes der zu klassifizierenden Produkte benötigt, so dass der manuelle Annotationsaufwand groß sein kann.

Alternativ kann das Training in zwei Schritten ausgeführt werden. Dabei wird zunächst das Kernmodell evtl. mit einer auf das konkrete Training angepassten Ausgangsschicht mittels kommerziell erhältlicher annotierter Daten (z.B. ImageNet) allgemein zur Objekterkennung trainiert (sog. Vortraining). Nach Abschluss dieses ersten Vortrainingsschritts kann die angepasste Ausgangsschicht durch den fully connected layer 440 ersetzt werden. Das Kernmodell wird dann mit den durch das erste Vortraining erhaltenden optimierten Parameterwerten initialisiert und der noch nicht trainierte fully connected layer 440 mit Zufallszahlen. Dann wird ein weiteres Training mit den manuell annotierten Bilddaten der Trainingsdaten durchgeführt. Dabei werden entweder alle Parameter des Klassifizierungsmodells weiter angepasst oder nur die des fully connceted layers 440. Damit wird das Klassifizierungsmodell für die spezielle Aufgabe der Produktklassifizierung trainiert (dieser zweite Schritt wird auch als Feinabstimmung bezeichnet). Für dieses zweistufige Training sind häufig weniger manuell annotierte Bilddaten für die Trainingsdaten des zweiten Trainingsschrittes notwendig, was den Aufwand für die manuelle Annotation verringert. Das Kernmodell 410 kann auch durch öffentlich verfügbare Modelle wie z.B. z.B. AlexNet, Inception, ResNet-50, VGGNet ersetzt werden. Diese Modelle können auch bereits vortrainiert öffentlich verfügbar und können so benutzt werden, womit der erste Trainingsschritt entfallen kann und nur noch der Feinabstimmungsschritt durchgeführt werden muss.

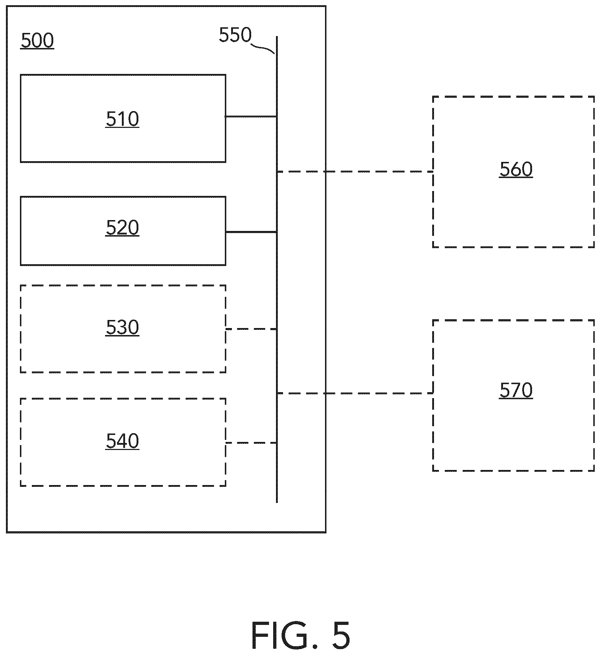

Die Klassifizierungseinheit 150 und die Steuereinheiten 170 und 290 können jeweils durch eine prozessorgesteuerte Datenverarbeitungsvorrichtung implementiert werden. **Fig. 5** zeigt eine beispielhafte Ausführungsform einer solchen Datenverarbeitungsvorrichtung 500, die einen oder mehrere Prozessoren 510 (z.B. X86 CPU, ARM CPU, GPU, APU), einen Arbeitsspeicher 520 (z.B. SRAM, DRAM) und einen optionalen Massenspeicher 530 (z.B. Festplatte, SSD) umfasst. Für die Klassifizierungseinheit 150 kann es vorteilhaft sein, wenn die Datenverarbeitungsvorrichtung 500 zusätzlich einen oder mehrere spezialisierte KI-Prozessoren 540 umfasst. Spezialisierte KI-Prozessoren 540 können einen oder mehrere Prozessorkerne umfassen, die eingerichtet sind, um Rechenoperationen effizient auszuführen, die beim Training und der Anwendung von KI-Modellen häufig verwendet werden (z.B. Matrixmultiplikationen). Der Arbeitsspeicher 520, der Massenspeicher 530, die Prozessoren 510 und die spezialisierten KI-Prozessoren 540 sind untereinander über ein Bussystem 560 verbunden und können über das Bussystem 560 Daten austauschen. Der Arbeitsspeicher 520 und/oder der Massenspeicher 530 können ausführbare Befehle umfassen, die, bei Ausführung durch den oder die Prozessoren 510 und/oder den oder die spezialisierten KI-Prozessoren, die Datenverarbeitungsvorrichtung 500 dazu veranlassen eines der hier offenbarten erfindungsgemäßen Verfahren (z.B. Verfahren 300) auszuführen. Die Datenverarbeitungsvorrichtung 500 kann eine externe oder interne Eingabevorrichtung 570 (z.B. Tastatur, Maus, Touchscreen) und/oder eine externe oder interne Anzeigevorrichtung 560 (z.B. LCD-Display, LED-Display, Screen-Reader, Lautsprecher) aufweisen. Die Industriemaschine 100 kann eine Eingabeeinheit umfassen, diese kann durch die Eingabevorrichtung 570 implementiert sein. Entsprechend kann die Industriemaschine 100 eine Ausgabeeinheit umfassen, die durch die Anzeigevorrichtung 560 implementiert sein kann.

## Patentansprüche

1. Industriemaschine (100), die eingerichtet ist zur Lebensmittelverarbeitung oder als Verpackungsmaschine, wobei die Industriemaschine (100) Folgendes aufweist:
eine Zuführungseinheit (110), die eingerichtet ist, um der Industriemaschine (100) Produkte (115a, 115b, 115c) zur Verarbeitung zuzuführen;
eine Bilderfassungseinheit (140), die eingerichtet ist, um elektronische Bilddaten (155) zu erfassen, die ein Produkt (115b) abbilden, wobei die Bilddaten (155) erfasst werden, während sich das Produkt (115b) in der Zuführungseinheit (110) befindet;
eine Klassifizierungseinheit (150), die eingerichtet ist, um den Bilddaten (155) eine dem abgebildeten Produkt (115b) entsprechende Produktklassifizierung (165) zuzuordnen, wobei das Zuordnen der Produktklassifizierung (165) das Anwenden eines Klassifizierungsmodells (160) auf die Bilddaten (155) umfasst; und
eine Steuereinheit (170), die eingerichtet ist, um basierend auf der Produktklassifizierung (165) aus einer Vielzahl von vordefinierten Verarbeitungsrezepten (185a-185e) diejenigen zu ermitteln, die zur Verarbeitung des Produktes (155) mit der Industriemaschine (100) eingerichtet sind, und eines der ermittelten Verarbeitungsrezepte (185a-185e) als Konfigurationsrezept (175) zu bestimmen, wobei die Steuereinheit (170) ferner eingerichtet ist, um die Industriemaschine gemäß dem Konfigurationsrezept (175) zur Verarbeitung des Produktes anzupassen.

2. Industriemaschine (100) nach Anspruch 1, wobei das Konfigurationsrezept (175) eine Vielzahl von Parameterwerten für Betriebsparameter der Industriemaschine (100) umfasst, wobei die Steuereinheit (170) eingerichtet ist, um die Betriebsparameter der Industriemaschine (100) an die entsprechenden Parameterwerte des Konfigurationsrezepts (175) anzupassen, so dass die Industriemaschine (100) speziell eingerichtet ist, um das Produkt (115b) zu verarbeiten und wobei die Industriemaschine (100) erst mit Anpassung der Betriebsparameter der Industriemaschine (100) an die Parameterwerte des Konfigurationsrezepts (175) zur Verarbeitung des Produktes (115b) eingerichtet ist.

3. Industriemaschine (100) nach Anspruch 1 oder 2, wobei die Steuereinheit (170) eingerichtet ist, falls nur eines der vordefinierten Verarbeitungsrezepte (185) zur Verarbeitung des Produkts (115b) mit der Industriemaschine (100) eingerichtet ist, um dieses eine eingerichtete Verarbeitungsrezept (185) zu ermitteln und als Konfigurationsrezept (175) zu bestimmen, und wobei die Steuereinheit (170) ferner eingerichtet ist, um die Industriemaschine (100) automatisch zur Verarbeitung des Produkts (115b) gemäß dem Konfigurationsrezept (175) anzupassen.

4. Industriemaschine (100) nach einem der vorhergehenden Ansprüche, wobei die Industriemaschine (100) ferner eine Anzeigeeinheit (560) und eine Eingabeeinheit (570) umfasst, und wobei die Steuereinheit (170) ferner eingerichtet ist, um die ermittelten Verarbeitungsrezepte (185) an der Anzeigeeinheit (560) anzuzeigen und, in Reaktion darauf, eine Benutzereingabe von der Eingabeeinheit (570) zu empfangen, die eines der angezeigten Verarbeitungsrezepte (185) bezeichnet, und wobei die Steuereinheit (170) ferner eingerichtet ist, um das bezeichnete Verarbeitungsrezept (185) als Konfigurationsrezept (175) zu bestimmen.

5. Industriemaschine (100) nach einem der vorhergehenden Ansprüche, wobei die Bilderfassungseinheit (140) ein Kameramodul umfasst, und/oder wobei die Bilderfassungseinheit (140) die Klassifizierungseinheit (150) umfasst.

6. Industriemaschine (100) nach einem der vorhergehenden Ansprüche, wobei das Konfigurationsrezept (175) einen Material- oder Werkzeugwechsel vorsieht, wobei die Steuereinheit (170) ferner dazu eingerichtet ist, um als Teil des Anpassens der Industriemaschine (100) den Betrieb der Industriemaschine (100) anzuhalten und einen Hinweis zu dem vorgesehenen Material- oder Werkzeugwechsel an einer Anzeigeeinheit (560) der Industriemaschine (100) anzuzeigen.

7. Industriemaschine (100) nach einem der vorhergehenden Ansprüche,
wobei das Produkt (115b) als erstes Produkt in Verarbeitungsrichtung unmittelbar vor einem zweiten Produkt (115a) in der Zuführungseinheit (110) angeordnet ist,
wobei die Bilderfassungseinheit (140) ferner eingerichtet ist, um zweite elektronische Bilddaten (155) zu erfassen, die das zweite Produkt (115a) abbilden, während es sich in der Zuführungseinheit (110) befindet,
wobei die Klassifizierungseinheit (150) ferner eingerichtet ist, um den zweiten Bilddaten (155) eine dem abgebildeten zweiten Produkt (115a) entsprechende zweite Produktklassifizierung (165) zuzuordnen, wobei das Zuordnen der zweiten Produktklassifizierung (165) das Anwenden des Klassifizierungsmodells (160) auf die zweiten Bilddaten (155) umfasst,
wobei die Steuereinheit (170) ferner eingerichtet ist, um festzustellen, ob die zweite Produktklassifizierung (165) mit der dem ersten Produkt entsprechenden Produktklassifizierung (165) übereinstimmt, und um das für die Verarbeitung des ersten Produktes (115b) eingerichtete Konfigurationsrezept (175) und die entsprechende Anpassung der Industriemaschine (100) für die Verarbeitung des zweiten Produktes (115a) beizubehalten, falls die Steuereinheit (170) feststellt, dass die zweite Produktklassifizierung (165) mit der dem ersten Produkt (115b) entsprechenden Produktklassifizierung (165) übereinstimmt.

8. Industriemaschine (100) nach Anspruch 7, wobei, die Steuereinheit (170), falls sie feststellt, dass die zweite Produktklassifizierung (165) mit der dem ersten Produkt (115b) entsprechenden Produktklassifizierung (165) nicht übereinstimmt, ferner eingerichtet ist, um basierend auf der zweiten Produktklassifizierung (165) aus der Vielzahl von vordefinierten Verarbeitungsrezepten (185) diejenigen zu ermitteln die zur Verarbeitung des zweiten Produktes (115a) mit der Industriemaschine (100) eingerichtet sind, und eines der ermittelten Verarbeitungsrezepte (185) als neues Konfigurationsrezept (175) zu bestimmen, wobei die Steuereinheit (170) ferner eingerichtet ist, um die Industriemaschine (100) gemäß dem neuen Konfigurationsrezept (175) zur Verarbeitung des zweiten Produktes (115a) anzupassen.

9. Industriemaschine (100) nach einem der vorhergehenden Ansprüche, wobei das Klassifizierungsmodell (160) auf maschinellem Lernen beruht und vorzugsweise ein künstliches neuronales Netzwerk, ein Transfer-Learning-Modell, eine Support-Vector-Machine, einen Entscheidungsbaum, und/oder ein Bayes-Modell umfasst.

10. Verfahren (300) zum Betrieb einer Industriemaschine (100), die zur Lebensmittelverarbeitung oder als Verpackungsmaschine eingerichtet ist, wobei das Verfahren Folgendes umfasst:
Erfassen (310) von elektronischen Bilddaten (155) mittels einer Bilderfassungseinheit (140) der Industriemaschine (100), wobei die elektronischen Bilddaten (155) ein Produkt (155b) abbilden und erfasst werden, während sich das Produkt (115b) in einer Zuführungseinheit (110) der Industriemaschine (100) befindet, wobei die Zuführungseinheit (110) eingerichtet ist, um das Produkt (115b) der Industriemaschine (100) zuzuführen,
Klassifizieren (320) der Bilddaten (155) durch Anwenden eines Klassifizierungsmodells (160) auf die Bilddaten (155), wobei den Bilddaten (155) als Ergebnis der Klassifizierung eine dem Produkt (115b) entsprechende Produktklassifizierung (165) zugeordnet wird,
Ermitteln (330), basierend auf der Produktklassifizierung (165), derjenigen Verarbeitungsrezepte aus einer Vielzahl von vordefinierten Verarbeitungsrezepten (185), die zur Verarbeitung des Produktes (115b) mit der Industriemaschine eingerichtet sind,
Bestimmen (340) eines der ermittelten Verarbeitungsrezepte (185) als Konfigurationsrezept (175), und
Anpassen (350) der Industriemaschine (100) gemäß dem Konfigurationsrezept (175) zur Verarbeitung des Produktes (115b).

11. Verfahren (300) nach Anspruch 10, wobei das Konfigurationsrezept (175) eine Vielzahl von Parameterwerten für Betriebsparameter der Industriemaschine (100) umfasst, und wobei das Anpassen der Industriemaschine (100) das Anpassen der Betriebsparameter der Industriemaschine (100) an die entsprechenden Parameterwerte des Konfigurationsrezepts (175) umfasst, so dass die Industriemaschine (100) speziell eingerichtet ist das Produkt (115b) zu verarbeiten, und wobei die Industriemaschine (100) erst mit Anpassung der Betriebsparameter der Industriemaschine (100) an die Parameterwerte des Konfigurationsrezepts (175) zur Verarbeitung des Produktes (115b) eingerichtet ist.

12. Verfahren (300) nach Anspruch 10 oder 11, wobei, falls nur eines der vordefinierten Verarbeitungsrezepte (185) zur Verarbeitung des Produkts (115b) mit der Industriemaschine (100) eingerichtet ist, nur dieses eine Verarbeitungsrezept ermittelt und als Konfigurationsrezept (175) bestimmt wird, und wobei die Anpassung der Industriemaschine (100) zu Verarbeitung des Produktes (115b) gemäß dem Konfigurationsrezept (175) automatisch erfolgt.

13. Verfahren (300) nach einem der Ansprüche 10 bis 12, wobei das Verfahren ferner Folgendes umfasst:
Anzeigen der ermittelten Verarbeitungsrezepte (185) an einer Anzeigeeinheit (560) der Industriemaschine (100),
in Reaktion auf das Anzeigen der ermittelten Verarbeitungsrezepte (185), Empfangen einer Benutzereingabe, die eines der angezeigten Verarbeitungsrezepte (185) bezeichnet, und
Bestimmen des bezeichneten Verarbeitungsrezepts (185) als Konfigurationsrezept (175).

14. Verfahren (300) nach einem der Ansprüche 9 bis 13, wobei das Konfigurationsrezept (175) einen Material- oder Werkzeugwechsel vorsieht, und das Verfahren ferner Folgendes umfasst:
Anhalten des Betriebs der Industriemaschine (100), und
Anzeigen eines Hinweises zu dem vorgesehenen Material- oder Werkzeugwechsel an einer Anzeigeeinheit (560) der Industriemaschine.

15. Verfahren (300) nach einem der Ansprüche 9 bis 14, wobei das Produkt (115b) als erstes Produkt in Verarbeitungsrichtung unmittelbar vor einem zweiten Produkt (115a) in der Zuführungseinheit (110) angeordnet ist, und wobei das Verfahren ferner Folgendes umfasst:
Erfassen von zweiten elektronischen Bilddaten (155) mittels der Bilderfassungseinheit (140), wobei die Bilddaten (155) das zweite Produkt (115a) abbilden und erfasst werden, während sich das zweite Produkt (115a) in der Zuführungseinheit (110) der Industriemaschine (100) befindet,
Klassifizieren der zweiten Bilddaten (155) durch Anwenden des Klassifizierungsmodells (160) auf die zweiten Bilddaten (155), wobei den zweiten Bilddaten (155) als Ergebnis der Klassifizierung eine dem zweiten Produkt (115a) entsprechende zweite Produktklassifizierung (165) zugeordnet wird,
Feststellen, ob die zweite Produktklassifizierung (165) mit der dem ersten Produkt (115b) entsprechenden Produktklassifizierung (165) übereinstimmt, und
falls festgestellt wird, dass die zweite Produktklassifizierung (165) mit der dem ersten Produkt (115b) entsprechenden Produktklassifizierung (165) übereinstimmt, Beibehalten des für die Verarbeitung des ersten Produkts (115b) eingerichteten Konfigurationsrezepts (175) und der entsprechenden Anpassung der Industriemaschine (100) für die Verarbeitung des zweiten Produkts (115a).

16. Verfahren (300) nach Anspruch 15, ferner umfassend:
falls festgestellt wird, dass die zweite Produktklassifizierung (165) mit der dem ersten Produkt (115b) entsprechenden Produktklassifizierung (165) nicht übereinstimmt:
Ermitteln, basierend auf der zweiten Produktklassifizierung (165), derjenigen Verarbeitungsrezepte aus der Vielzahl von vordefinierten Verarbeitungsrezepten (185), die zur Verarbeitung des zweiten Produktes (115b) mit der Industriemaschine (100) eingerichtet sind,
Bestimmen eines der ermittelten Verarbeitungsrezepte (185) als neues Konfigurationsrezept (175), und
Anpassen der Industriemaschine (100) gemäß dem neuen Konfigurationsrezept (175) zur Verarbeitung des zweiten Produktes (115a).

17. Verfahren (300) nach einem der Ansprüche 10 bis 16, wobei das Klassifizierungsmodell (160) auf maschinellem Lernen beruht und vorzugsweise ein künstliches neuronales Netzwerk, ein Transfer-Learning-Modell, eine Support-Vector-Machine, einen Entscheidungsbaum, und/oder ein Bayes-Modell umfasst.

18. Produktverarbeitungssystem (200), umfassend:
eine Vielzahl von Industriemaschinen (240, 260, 280), die jeweils zur Lebensmittelverarbeitung oder als Verpackungsmaschine eingerichtet sind, wobei jede der Industriemaschinen (240, 260, 280) jeweils auf die Verarbeitung eines anderen Produktes eingerichtet ist, und wobei jeder der Industriemaschinen (240, 260, 280) eine Zuführungseinheit (230, 250, 270) umfasst, die eingerichtet ist, um der entsprechenden Industriemaschine (240, 260, 280) Produkte zur Verarbeitung zuzuführen;
eine zentrale Transsporteinrichtung (210), die eingerichtet ist, um Produkte (215a, 215b, 215c, 215d) zu den Zuführungseinheiten (230, 250, 270) der Vielzahl von Industriemaschinen (240, 260, 280) zu transportieren, wobei die zentrale Transporteinrichtung (210) eine Verteilungseinrichtung (220) umfasst, die eingerichtet ist, um die von der zentralen Transporteinrichtung (210) transportierten Produkte (215a, 215b, 215c, 215d) auf die Zuführungseinheiten (230, 250, 270) der Vielzahl von Industriemaschinen zu verteilen;
eine Bilderfassungseinheit (140), die eingerichtet ist, um elektronische Bilddaten (155) zu erfassen, die ein Produkt (215d) abbilden, wobei die Bilddaten (155) erfasst werden, während sich das Produkt (215d) in der zentralen Transporteinrichtung (210) befindet;
eine Klassifizierungseinheit (150), die eingerichtet ist, um den Bilddaten (155) eine dem Produkt (215d) entsprechende Produktklassifizierung (165) zuzuordnen, wobei das Zuordnen der Produktklassifizierung (165) das Anwenden eines Klassifizierungsmodells (160) auf die Bilddaten (155) umfasst; und
eine Steuereinheit (290), die eingerichtet ist, um eine Industriemaschine der Vielzahl von Industriemaschinen (240, 260, 280) basierend auf der Produktklassifizierung (165) auszuwählen, so dass die Produktklassifizierung (165) einem Produkt entspricht für dessen Verarbeitung die ausgewählte Industriemaschine (240, 260, 280) eingerichtet ist, wobei die Steuereinheit (290) ferner eingerichtet ist, um die Verteilungseinrichtung (220) so zu steuern, dass das Produkt von der zentralen Transporteinrichtung (210) an die Zuführungseinheit (230, 250, 270) der ausgewählten Industriemaschine (240, 260, 280) übergeben wird.
